**Europäisches Patentamt**

**European Patent Office**

**Office européen des brevets**

(19)

(11) Veröffentlichungsnummer: **0 278 372**
**A2**

# (12) EUROPÄISCHE PATENTANMELDUNG

(21) Anmeldenummer: **88101510.1**

(22) Anmeldetag: **03.02.88**

(51) Int. Cl.⁴: **G05D 23/24**

(30) Priorität: **12.02.87 DE 3704342**

(43) Veröffentlichungstag der Anmeldung:
**17.08.88 Patentblatt 88/33**

(84) Benannte Vertragsstaaten:
**DE ES FR GB IT**

(71) Anmelder: **Deutsche Thomson-Brandt GmbH**
**Postfach 1307**
**D-7730 Villingen-Schwenningen(DE)**

(72) Erfinder: **Rilly, Gerard, Dr.**
**Panoramaweg 6**
**D-7731 Unterkirnach(DE)**

(74) Vertreter: **Körner, Peter, Dipl.-Ing.**
**Deutsche Thomson-Brandt GmbH Patent-**
**und Lizenzabteilung Göttinger Chaussee 76**
**D-3000 Hannover 91(DE)**

(54) **Elektronischer Thermostat.**

(57) Bei einem elektronischen Thermostat mit einem Heizwiderstand (RH), einer Temperatursonde (S1), einer Vergleichsstufe (C1) und einem gesteuerten Triac (Tr) entsteht durch Wärmestrahlung vom Heizwiderstand (RH) auf die Temperatursonde (S1) eine Abweichung der Umgebungstemperatur (Tu) von der mit der Sonde (S1) gemessenen Temperatur (Tm).

Die Abweichung wird kompensiert mit einer 2. Temperatursonde (S2), die in Wärmekontakt mit dem Triac (tr) steht und an einen Eingang der Vergleichsstufe (C1) angeschlossen ist.

Insbesondere Thermostat für Konvektoren für eine Raumheizung.

EP 0 278 372 A2

## Elektronischer Thermostat

Bei einem elektronischen Thermostaten, wie er z.B. zur Regelung der Raumtemperatur bei einem Konvektor-Heizkörper verwendet wird, sind eine in der Nähe des Heizwiderstandes angeordnete Temperatursonde und ein zur Temperatur-Vorgabe dienendes Einstellglied an die Eingänge einer Vergleichsstufe angeschlossen. Diese erzeugt in Abhängigkeit von der Differenz zwischen der mit der Temperatursonde gemessenen Temperatur und der vorgegebenen Temperatur Zündimpulse für einen im Stromweg des Heizwiderstandes liegenden Triac. In Abhängigkeit von der genannten Differenz wird der Triac mehr oder weniger lange gezündet und somit dem Heizwiderstand mehr oder weniger Leistung zugeführt. Wenn die gemessene Temperatur die vorgegebene Temperatur erreicht oder überschreitet, wird der Triac nicht mehr gezündet. Die Temperatursonde ist vorzugsweise unterhalb des Heizwiderstandes angeordnet, um die Temperatur der eintretenden Luft und damit die Raumtemperatur zu messen.

Bei einem solchen Thermostaten kommt es unvermeidbar zu einer Wärmestrahlung des Heizwiderstandes auf die Temperatursonde. Das bedeutet, daß mit der Temperatursonde eine zu hohe Temperatur gemessen wird, die von der Umgebungs-oder Raumtemperatur in einem Abstand von mehreren Metern von dem Heizgerät abweicht. Die Raumtemperatur in einem größeren Abstand vom Heizwiderstand ist dann geringer als die mit der Temperatursonde gemessene und durch den Thermostaten eingeregelte Temperatur. Diese Abweichung ist nicht konstant, sondern insbesondere von der dem Heizwiderstand zugeführten Leistung abhängig. Es ist daher ohne weiteres nicht möglich, die Abweichung durch eine entsprechend geänderte Vorgabetemperatur auszugleichen. Es hat sich gezeigt, daß die Abweichung zwischen 0° C und 6° C liegt.

Es ist bekannt, die Temperatursonde aus dem Heizgerät herauszunehmen und in einem Abstand von mehreren Metern von dem Heizwiderstand anzuordnen. Dann wird die Temperatursonde nicht mehr von dem Heizwiderstand beeinflußt und mißt exakt die Raum-oder Umgebungstemperatur. Diese Lösung erfordert aber ein Kabel zwischen der Temperatursonde und dem Thermostaten und ist in vielen Fällen, insbesondere bei kleinen mobilen Heizgeräten, nicht praktikabel.

Es ist auch bekannt, zwischen dem Heizwiderstand und der Temperatursonde Abschirmmittel oder Reflektoren vorzusehen, die eine Wärmestrahlung des Heizwiderstandes auf die Temperatursonde verhindern. Die Lösung ist aber konstruktiv aufwendig und relativ teuer.

Der Erfindung liegt die Aufgabe zugrunde, ohne teure konstruktive Lösungen auf einfache Weise die genannte Abweichung der Raumtemperatur auf elektronischem Wege zu beseitigen.

Diese Aufgabe wird durch die im Anspruch 1 beschriebene Erfindung gelöst. Vorteilhafte Weiterbildungen der Erfindung sind in den Unteransprüchen beschrieben.

Die Erfindung beruht auf folgenden Erkenntnissen und Überlegungen:

Die Erwärmung des Triac ist im vorliegenden Fall ein verwertbares Maß für die dem Heizwiderstand zugeführte Leistung. Deshalb kann aus der Erwärmung des Triac mit der 2. Temperatursonde eine Stellgröße gewonnen werden, die von der dem Heizwiderstand zugeführten Leistung abhängig ist und daher an einem Eingang der Vergleichsstufe die genannte Abweichung kompensieren kann. Die an sich nachteilige Erwärmung des Triac wird bei der Erfindung also in vorteilhafter Weise zur Erzeugung einer zur Kompensation der beschriebenen Abwei chung dienenden Stellgröße ausgenutzt. Vorzugsweise ist die zweite Temperatursonde an einem Kühlkörper des Triac angeordnet. Dadurch wird in die von der 2. Sonde gelieferte Stellgröße eine beträchtliche Trägheit von mehreren Minuten eingeführt. Es wird also nicht die augenblickliche, dem Heizwiderstand zugeführte Leistung gemessen, sondern der Mittelwert über mehrere Minuten. Dieses ist jedoch kein Nachteil, sondern sogar erwünscht, weil die erfindungsgemäße Kompensation nur mit einer großen Trägheit zu erfolgen braucht und daher auch nur der Mittelwert der dem Heizwiderstand zugeführten Leistung über mehrere Minuten ausgewertet werden muß. Der Kühlkörper des Triac wird also in vorteilhafter Weise für eine gewünschte träge Messung der Heizleistung verwendet. Die erfindungsgemäße Lösung ermöglicht eine vollständige Kompensation der genannten Abweichung in der Umgebungstemperatur. Es ist auch eine Überkompensation möglich, derart, daß die Umgebungstemperatur mit steigender Leistung am Heizwiderstand sogar höher wird als die vorgegebene Temperatur. Ein weiterer Vorteil besteht in Folgendem: Die Temperatur des Kühlkörpers des Triac - schwankt in der Praxis zwischen 20° bis 80° C, also über einen relativ großen Bereich von 60° C. Dieser große Temperatur-Bereich ermöglicht eine hohe Regelsteilheit und eine große Flexibilität in der Bemessung der Schaltung. Wegen dieser starken Temperaturänderung und damit der relativ großen, von der 2. Temperatursonde gelieferten Stellgröße, ist für eine einwandfreie Funktion der Schaltung keine zusätzliche Verstärkung erforderlich.

Die Erfindung wird im folgenden anhand der Zeichnung erläutert. Darin zeigen

Figur 1 ein Prinzipschaltbild der erfindungsgemäßen Lösung,

Figur 2 die Steuerung durch den Triac und

Figur 3 ein praktisch erprobtes, detailliertes Schaltbild für die Schaltung nach Figur 1.

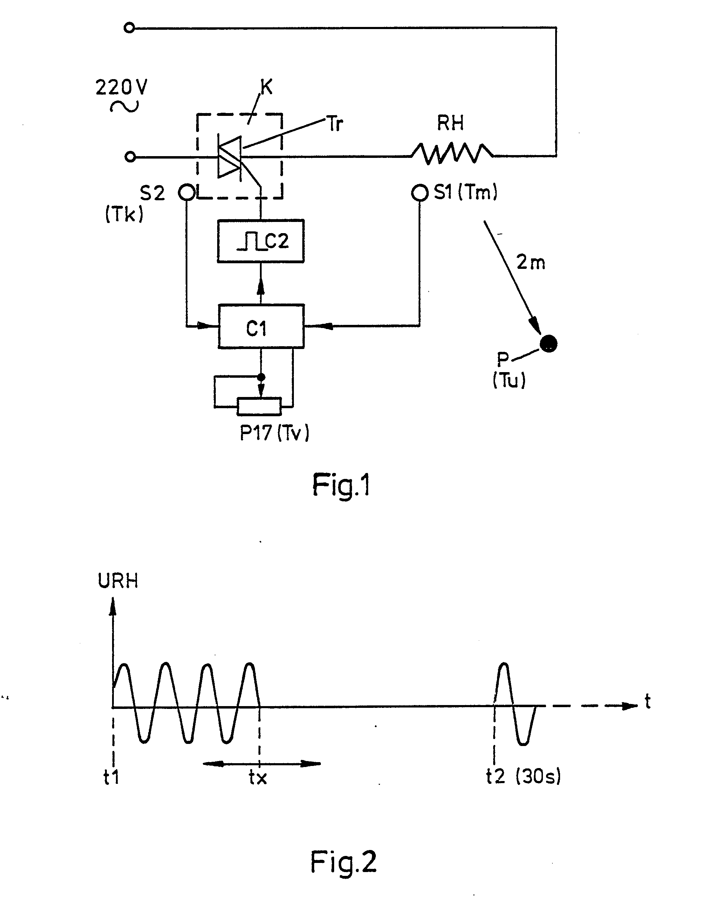

Figur 1 zeigt einen Thermostaten mit dem Heizwiderstand RH, dem im Stromweg liegenden Triac Tr, der ersten Temperatursonde S1, der Vergleichsstufe C1, dem zur Einstellung der Vorgabetemperatur Tv dienenden Potentiometer P17 und der Impulsstufe C2. Tv ist die Vorgabe-Temperatur, d.h. die gewünschte Umgebungstemperatur, die mit dem an die Vergleichsstufe C1 angeschlossenen Potentiometer P17 einstellbar ist. Tm ist die von der Sonde S1 gemessene Temperatur unterhalb des Heizwiderstandes RH. Tu ist die Umgebungstemperatur im Punkt P in einem Abstand von ca. 2m von dem Heizwiderstand RH.

Bei einer solchen Schaltung kommt es durch Wärmestrahlung vom Heizwiderstand RH auf die Sonde S1 zu einer Abweichung zwischen Tu und Tm, derart, daß die Umgebungstemperatur Tu in Abhängigkeit von der dem Heizwiderstand RH zugeführten Leistung mehr oder weniger zu klein ist.

Zum Ausgleich dieser Abweichung ist an dem Kühlkörper K des Triac Tr die zweite Temperatursonde S2 vorgesehen, die die Temperatur Tk des Kühlkörpers K mißt. Die zweite Sonde S2 ist an einen Eingang der Vergleichsstufe C1 angeschlossen. Die Sonde S2 liefert an die Vergleichsstufe C1 eine von der Temperatur Tk des Kühlkörpers K und damit von der dem Heizwiderstand RH zugeführten Leistung abhängige Stellgröße an die Vergleichsstufe C1. Diese Stellgröße kompensiert die an sich auftretende beschriebene Abweichung von Tu.

Gem. Figur 2 wird jeweils während eines konstanten Zeitraumes t1-t2 von 30 s von t1 bis tx über den gezündeten Triac Tr an den Heizwiderstand RH die Netzspannung URH angelegt. Von tx bis t2 ist der Triac Tr gesperrt. Die Lage von tx, d.h. der Zünd-Zeitraum t1 bis tx, wird durch die Vergleichsstufe C1 bestimmt und ist abhängig von der Differenz zwischen Tm und Tv. Wenn die mit der Sonde S1 gemessene Temperatur Tm die vorgegebene Temperatur Tv erreicht oder über - schreitet, ist tx = t1, der Triac Tr bleibt also gesperrt. Bei maximaler Abweichung zwischen Tv und Tm ist tx = t2. Dann ist der Triac Tr durch Zündimpulse von dem Impulsgeber C2 ständig leitend, und dem Heizwiderstand RH wird ständig maximale Leistung zugeführt.

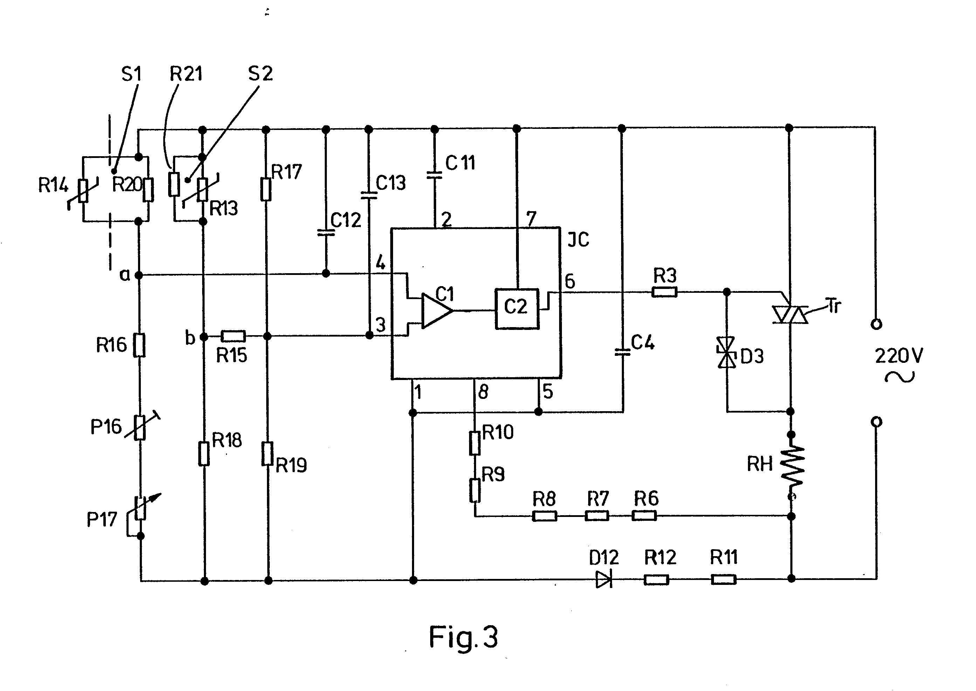

In Figur 3 sind die Vergleichsstufe CI und der Impulsgeber C2 von Figur 1 durch ein IC mit den Anschlußklemmen 1 bis 8 gebildet. Die erste Temperatursonde S1 ist gebildet durch den NTC-Widerstand R14 mit dem zur Linearisierung parallel geschalteten Widerstand R20. Die zweite Temperatursonde S2 ist gebildet durch den NTC-Widerstand R13 mit den zur Linearisierung parallel geschalteten Widerstand R21. Die Sonde S1 und das zur Einstellung der Vorgabetemperatur dienende Potentiometer P17 wirken auf den Eingang 4 der Vergleichsstufe C1. Die zweite Temperatursonde S2 wirkt auf den zweiten Eingang 3 der Vergleichsstufe C1. Der Widerstand R15 wirkt für die am Punkt b auftretende, zur Kompensation dienende Stellgröße zusammen mit R17 und R19 als Spannungsteiler und bestimmt das Maß der Kompensation.

An Stelle des Triac Tr können auch andere elektronisch steuerbare Schalter für Wechselspannung verwendet werden, z.B. zwei Thyristoren, die ein Triac nachbilden. Die erfindungsgemäße Schaltung kann grundsätzlich auch dann angewendet werden, wenn es sich um einen elektronischen Thermostaten für eine Kühlanlage handelt, wenn also der Heizwiderstand RH durch einen Verbraucher ersetzt wird, der eine Kühlung eines Raumes oder eines bestimmten Gerätes bewirkt.

Bei einer praktisch erprobten Schaltung gem. Figur 3 hatten die dargestellten Bauteile folgende Werte:

R3: 100 Ohm
R6: 270 kOhm
R7: 180 kOhm
R8: 180 kOhm
R9: 180 kOhm
R10: 180 kOhm
R11: 12 kOhm
R12: 15 kOhm
R13: NTC-Widerstand 47 kOhm
R14: NTC-Widerstand 47 kOhm
R15: 10 kOhm
R16: 12 kOhm
R17: 12 kOhm
R18: 12 kOhm
R19: 8,2 kOhm,

P16: 10 kOhm

C4: 100 µF
C11: 100 nF
C12: 10 nF
C13: 10 nF

D12: 1N4007
D3: BZW04 376 B

Tr: BTB 16-600 BV

**Ansprüche**

1. Elektronischer Thermostat, bei dem eine in der Nähe eines Heizwiderstandes (RH) angeordnete Temperatursonde (S1) und ein zur Temperatur-Vorgabe dienendes Einstellglied (P17) an eine Vergleichsstufe (C1) angeschlossen sind, die einen im Stromweg des Heizwiderstandes (RH) liegenden Triac (Tr) steuert, dadurch gekennzeichnet,daß in Wärmekontakt mit dem Triac (Tr) eine zweite Temperatursonde (S2) vorgesehen und an einen Steuereingang der Vergleichsstufe (C1) angeschlossen ist.

2. Thermostat nach Anspruch 1, dadurch gekennzeichnet, daß die zweite Temperatursonde (S2) an einem Kühlkörper (K) des Triac (Tr) angeordnet ist.

3. Thermostat nach Anspruch 1, dadurch gekennzeichnet, daß die Reihenschaltung eines als erste Temperatursonde (S1) dienenden temperaturabhängigen Widerstandes (R14) und eines als Einstellglied dienenden Widerstandes (P17) an eine Betriebsspannung und der Abgriff (a) der Reihenschaltung . an einen ersten Eingang (4) der Vergleichsstufe (C1) angeschlossen ist (Fig. 3).

4. Thermostat nach Anspruch 1, dadurch gekennzeichnet, daß die Reihenschaltung eines als zweite Temperatursonde (S2 ) dienenden temperaturabhängigen Widerstandes (R13) und eines Widerstandes (R18) an die Betriebsspannung und der Abgriff (b) der Reihenschaltung an einen zweiten Eingang (3) der Vergleichsstufe (C1) angeschlossen ist (Fig.3).

5. Thermostat nach Anspruch 4, dadurch gekennzeichnet, daß der Abgriff (b) der Reihenschaltung (R13,R18) über einen die Kompensationswirkung der zweiten Temperatursonde (S2) bestimmenden Spannungsteiler (R15,R17,R19 mit dem zweiten Eingang (3) der Vergleichsstufe (C1) verbunden ist (Fig.3).

6. Thermostat nach Anspruch 3 oder 4, dadurch gekennzeichnet, daß parallel zu dem temperaturabhängigen Widerstand (R14,R13) ein zur Linearisierung dienender Widerstand (R20,R21) liegt (Fig. 3).

Fig.1

Fig.2

Fig.3